# EUROPÄISCHE PATENTANMELDUNG

(11) **EP 3 444 708 A1**
(43) Veröffentlichungstag der Anmeldung: **20.02.2019**
(21) Anmeldenummer: 17186581.9
(22) Anmeldetag: 17.08.2017
(51) Int. Cl.: G06F 3/041

(54) **BERÜHRUNGSEMPFINDLICHE FLÄCHE**

(71) Anmelder: LNT Automation GmbH, 71397 Leutenbach-Nellmersbach (DE)
(72) Erfinder: Reichle, Daniel, 74523 Schwäbisch Hall (DE); Reeß, Thomas, 71397 Leutenbach (DE)
(74) Vertreter: Späth, Dieter

(57) **Zusammenfassung**

Zu einer Erhöhung einer Sicherheit einer Erkennung einer Position einer Berührung einer berührungsempfindlichen Fläche (1) wie beispielsweise eines Touchscreens schlägt die Erfindung die Verwendung von zwei Controllern (8, 9) vor, die die Position einer Berührung unabhängig voneinander feststellen.

## Beschreibung

Die Erfindung betrifft eine berührungsempfindliche Fläche mit den Merkmalen des Oberbegriffs des Anspruchs 1. Insbesondere betrifft die Erfindung einen Touchscreen, das heißt einen berührungsempfindlichen Bildschirm oder eine durchsichtige Platte mit einer berührungsempfindlichen Oberfläche und einem hinter der durchsichtigen Platte angeordneten Bildschirm.

Touchscreens sind an sich bekannt. Sie weisen einen Controller auf, der die Position einer Berührung des Touchscreens feststellt. Der Controller ist eine elektronische Steuerschaltung, die beispielsweise bei einem resistiven Touchscreen elektrische Widerstandsverhältnisse zwischen Rändern des Touchscreens misst und daraus die Position einer Berührung errechnet oder beispielsweise bei einem kapazitäten Touchscreen ein elektrisches, normalerweise Wechselstrom- oder gepulstes Signal ausgibt und ein Antwortsignal empfängt und auswertet. Die Erfindung ist weder auf resistive oder kapazitätive Touchscreens noch auf die beiden beispielsweise angesprochenen Arten von Controllern beschränkt. Controller sind üblicherweise als integrierte Schaltungen ausgeführt. Es sind auch undurchsichtige, berührungsempfindliche Flächen beispielsweise zur Steuerung eines Zeigers auf einem Bildschirm eines Laptops bekannt.

Für manche Anwendungen ist eine weitestgehend fehlerfreie Feststellung der Position einer Berührung einer berührungsempfindlichen Fläche notwendig und/oder gesetzlich vorgeschrieben.

Aufgabe der Erfindung ist deswegen, eine berührungsempfindliche Fläche mit einer weitgehend fehlerfreien oder jedenfalls einer verbesserten Feststellung der Position einer Berührung der Fläche vorzuschlagen.

Diese Aufgabe wird erfindungsgemäß durch die Merkmale des Anspruchs 1 gelöst. Die erfindungsgemäße berührungsempfindliche Fläche weist zwei Controller auf, die eine Position einer Berührung der Fläche unabhängig voneinander feststellen. Stellen die beiden Controller eine gleiche oder näherungsweise gleiche Position einer Berührung der Fläche fest, wird die berührungsempfindliche Fläche höchstwahrscheinlich tatsächlich an der festgestellten Position berührt. Stellt nur einer der beiden Controller eine Position einer Berührung der berührungsempfindlichen Fläche fest oder stellen die beiden Controller unterschiedliche Positionen von Berührungen fest, ist unklar, ob und wo die berührungsempfindliche Fläche berührt wird. Wie in diesem Fall weiter verfahren wird, ist nicht Gegenstand der Erfindung.

Die Controller können gleichzeitig oder abwechselnd die Position einer Berührung der berührungsempfindlichen Fläche feststellen und/oder sie können die berührungsempfindliche Fläche sequenziell abtasten, d. h. nacheinander feststellen, ob über die berührungsempfindliche Fläche beispielsweise matrixartig verteilte Positionen berührt werden.

Die Erfindung umfasst auch die die Möglichkeit einer Feststellung mehrerer Positionen, an denen die berührungsempfindliche Fläche gleichzeitig berührt wird. Eine kapazitive berührungsempfindliche Fläche, beispielsweise ein kapazitiver Touchscreen, muss nicht berührt werden, mit einer kapazitiven berührungsempfindlichen Fläche ist eine Position beispielsweise eines Fingers schon dann feststellbar, wenn sich der Finger der berührungsempfindlichen Fläche nähert ohne sie zu berühren. Auch eine solche Feststellung einer Position ohne tatsächliche Berührung der berührungsempfindlichen Fläche ist als Feststellung der Position einer Berührung der berührungsempfindlichen Fläche im Sinne der Erfindung zu verstehen.

Die Sicherheit einer richtigen Erkennung der Position einer Berührung der berührungsempfindlichen Fläche bzw. umgekehrt ausgedrückt ein Ausschluss einer nicht erkannten Feststellung einer falschen Position einer Berührung der berührungsempfindlichen Fläche wird bei einer Ausführungsform der Erfindung durch zwei unterschiedliche Controller und/oder durch Anwendung zweier unterschiedlicher Messverfahren erhöht. Unterschiedliche Controller bedeutet insbesondere Controller unterschiedlicher Bauart. Es können unterschiedliche Controller eines Herstellers oder Controller unterschiedlicher Hersteller verwendet werden. Mit Messverfahren ist allgemein das Verfahren bzw. die Software gemeint, das/die vom Controller zur Feststellung der Position einer Berührung der berührungsempfindlichen Fläche durchgeführt bzw. verwendet wird, also beispielsweise das Senden eines Signals und Empfangen und Auswerten eines Antwortsignals.

Die Erfindung umfasst auch die Möglichkeit von mehr als zwei Controllern, die eine Position einer Berührung der berührungsempfindlichen Fläche unabhängig voneinander feststellen. Das ermöglicht zumindest in manchen, wenn auch nicht unbedingt in allen Fällen die Feststellung der Position einer Berührung der berührungsempfindlichen Fläche, wenn zwei Controller unterschiedliche Positionen einer Berührung der berührungsempfindlichen Fläche feststellen oder wenn ein Controller eine Berührung feststellt und ein anderer Controller keine Berührung feststellt.

Eine Ausgestaltung der Erfindung, die für einen oder als Touchscreen vorgesehen ist, weist eine durchsichtige Scheibe aufweist, deren eine Oberfläche die berührungsempfindliche Fläche bildet. Auf der durchsichtigen Scheibe sind durchsichtige Leiterbahnen nebeneinander und weitere, ebenfalls durchsichtige Leiterbahnen, die die einen nebeneinander angeordneten Leiterbahnen elektrisch isoliert kreuzen, ebenfalls nebeneinander angeordnet sind. Unter einer durchsichtigen Scheibe ist eine durchsichtige Platte zu verstehen, die beispielsweise aus Glas oder aus Kunststoff bestehen kann. Die Leiterbahnen können aus einem durchsichtigen, elektrisch leitfähigen Material bestehen und/oder so dünn und/oder schmal sein, dass sie durchsichtig oder jedenfalls nicht oder kaum wahrnehmbar sind, so dass ein hinter der durchsichtigen Scheibe angeordneter Bildschirm sichtbar ist. Die Leiterbahnen können einen elektrischen Widerstand aufweisen. Die einen Leiterbahnen werden nachfolgend auch als gekreuzte Leiterbahnen und die weiteren Leiterbahnen auch als kreuzende Leiterbahnen bezeichnet werden. Die gekreuzten und die kreuzenden Leiterbahnen können gerade und parallel nebeneinander angeordnet sein. Die durchsichtige Scheibe kann auch andere als gerade Leiterbahnen, beispielsweise abgewinkelte, bogen- oder wellenförmige Leiterbahnen aufweisen. Ebenfalls sind flächige Leiterbahnen mit grundsätzlich beliebiger Form möglich.

Die kreuzenden Leiterbahnen kreuzen die gekreuzten Leiterbahnen insbesondere rechtwinklig, allerdings können die kreuzenden Leiterbahnen die gekreuzten Leiterbahnen schräg in anderen Winkeln als rechtwinklig kreuzen.

Die kreuzenden und die gekreuzten Leiterbahnen können auf gegenüberliegenden Seiten der durchsichtigen Scheibe angeordnet sein und sind dann durch die Scheibe an den Kreuzungspunkten elektrisch voneinander isoliert. Die kreuzenden und die gekreuzten Leiterbahnen können auch auf derselben Seite der durchsichtigen Scheibe angeordnet sein und sind in diesem Fall an den Kreuzungspunkten durch eine elektrische Isolierung elektrisch voneinander isoliert. Eine solche elektrische Isolierung kann auf die gekreuzten Leiterbahnen laminiert werden, bevor die kreuzenden Leiterbahnen auflaminiert werden. Ein Vorteil der Anordnung aller Leiterbahnen auf einer Seite der Scheibe des Touchscreens ist, dass die Seite mit den Leiterbahnen als Rückseite verwendet werden kann, die durch die Scheibe vor Berührung geschützt ist.

Auch ist es möglich, auf beiden Seiten der durchsichtigen Scheibe gekreuzte und kreuzende Leiterbahnen anzuordnen. In diesem Fall können, allerdings nicht müssen, die Leiterbahnen auf einer Seite der Scheibe an einen Controller und die Leiterbahnen auf der gegenüberliegenden Seite der Scheibe an einen anderen Controller angeschlossen sein.

Auch ist es möglich, auf einer Seite der durchsichtigen Scheibe gekreuzte Leiterbahnen und/oder kreuzende Leiterbahnen in mehreren Schichten elektrisch isoliert voneinander anzubringen.

Die beiden oder mehr als zwei Controller können die Leiterbahnen abwechselnd nacheinander, also sequenziell, zur Feststellung der Position einer Berührung des Touchscreens verwenden. Ebenso ist es möglich, dass an jeden Controller eigene Leiterbahnen angeschlossen sind, dass also beispielsweise an einen von zwei, drei oder mehr Controllern jede zweite, dritte usw. der gekreuzten und/oder kreuzenden Leiterbahnen angeschlossen ist.

Eine Ausgestaltung der Erfindung sieht vor, dass Anschlussleitungen, die die durchsichtigen Leiterbahnen mit den Controllern verbinden, abwechselnd an gegenüberliegenden Enden an die Leiterbahnen angeschlossen sind. Die Anschlussleitungen lassen sich bei dieser Ausgestaltung der Erfindung parallel zu Rändern der der berührungsempfindlichen Fläche innerhalb oder außerhalb der Ränder an den Enden der Leiterbahnen vorbei jeweils zu den Leiterbahnen führen, wobei die nebeneinander angeordneten Leiterbahnen abwechselnd an gegenüberliegenden Enden an die Anschlussleitungen angeschlossen sind. Die gekreuzten Leiterbahnen werden an gegenüberliegenden Rändern der berührungsempfindlichen Fläche und die kreuzenden Leiterbahnen an anderen gegenüberliegenden Rändern der berührungsempfindlichen Fläche an die Anschlussleitungen angeschlossen. Die Anschlussleitungen an einem Rand der berührungsempfindlichen Fläche werden insbesondere an einen Controller angeschlossen.

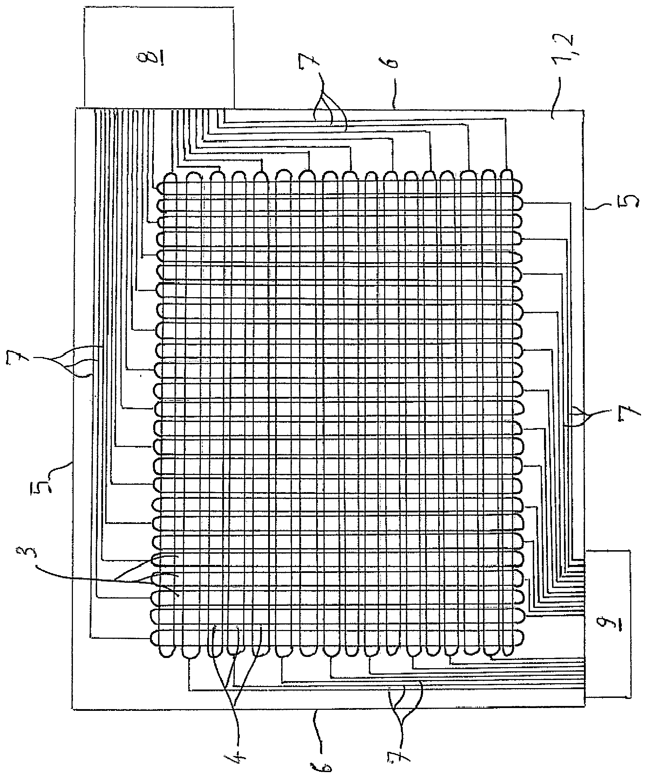

Die Erfindung wird nachfolgend anhand eines in der Zeichnung dargestellten Ausführungsbeispiels näher erläutert. Die einzige Figur zeigt eine Ansicht eines Touchscreens mit einer berührungsempfindlichen Oberfläche gemäß der Erfindung.

Der in der Zeichnung dargestellte, erfindungsgemäße Touchscreen 1 weist eine rechteckige Glasscheibe 2 auf, auf der durchsichtige Leiterbahnen 3, 4 angeordnet sind. Die Oberfläche der Glasscheibe 2 mit den Leiterbahnen 3, 4 oder eine gegenüberliegende Oberfläche der Glasscheibe 2 bildet eine berührungsempfindliche Fläche. Die Leiterbahnen 3, 4 bestehen aus einem durchsichtigen, elektrisch leitenden Material. Die Leiterbahnen 3, 4 sind in zwei einander rechtwinklig kreuzenden Schichten auf der Glasscheibe 2 angeordnet, wobei die Leiterbahnen 3, 4 jeder Schicht gerade und parallel zueinander nebeneinander angeordnet sind und die Leiterbahnen 4, 3 der jeweils anderen Schicht im Ausführungsbeispiel rechtwinklig kreuzen. Die Leiterbahnen 3 einer Schicht werden nachfolgend zur Unterscheidung auch als gekreuzte Leiterbahnen 3 und die Leiterbahnen 4 der anderen Schicht auch als kreuzende Leiterbahnen 4 bezeichnet werden. An Kreuzungspunkten sind die einander kreuzenden Leiterbahnen 3, 4 durch eine nicht gezeichnete elektrische Isolierschicht elektrisch voneinander isoliert.

Sofern die Scheibe 2 nicht als Touchscreen verwendet wird, sondern als berührungsempfindliche Fläche, können die Scheibe 2 und/oder die Leiterbahnen 3, 4 undurchsichtig sein. Anstelle einer Scheibe 2 kann eine Platte oder an sich ein beliebiger Körper verwendet werden, der eine Oberfläche mit den Leiterbahnen 3, 4 oder eine gegenüberliegende Oberfläche als berührungsempfindliche Fläche aufweist.

Die Leiterbahnen 3, 4 enden mit Abstand von Rändern 5, 6 der Glasscheibe 2 des Touchscreens 1. Zwischen Enden der Leiterbahnen 3, 4 und den Rändern 5, 6 der Glasscheibe 2 verlaufen parallel nebeneinander und parallel zu den Rändern 5, 6 der Glasscheibe 2 Anschlussleitungen 7, wobei die Anschlussleitungen 7 an ihren Enden rechtwinklig nach innen zu den Enden der Leiterbahnen 3, 4 abgewinkelt und elektrisch leitend mit den durchsichtigen Leiterbahnen 3,4 sind. Die Anschlussleitungen 7 können aus demselben oder einem anderen Material wie die Leiterbahnen 3, 4 bestehen. Die Anschlussleitungen 7 an einem Rand 5, 6 der Glasscheibe 2 sind mit jeder zweiten gekreuzten bzw. kreuzenden Leiterbahn 3, 4 verbunden und die dazwischen angeordneten Leiterbahnen 3, 4 sind mit den Anschlussleitungen 7 an einem gegenüberliegenden Rand 5, 6 der Glasscheibe 2 verbunden. Es ist also jede zweite gekreuzte Leiterbahn 3 mit einer Anschlussleitung 7 an beispielsweise einem Längsrand 5 der Glasscheibe 2 des Touchscreens 1 und die dazwischen angeordneten gekreuzten Leiterbahnen 3 mit den Anschlussleitungen 7 am gegenüberliegenden Längsrand 5 der Glasscheibe 2 des Touchscreens 1 und jede zweite kreuzende Leiterbahn 4 mit den Anschlussleitungen 7 an in diesem Fall einem Querrand 6 der Glasscheibe 2 des Touchscreens 1 und die dazwischen angeordneten kreuzenden Leiterbahnen 4 mit den Anschlussleitungen am gegenüberliegenden Querrand 6 der Glasscheibe 2 des Touchscreens 1 verbunden.

Die Anschlussleitungen 7 an einem Längsrand 5 und an einem Querrand 6 der Glasscheibe 2 des Touchscreens 1 führen nahe einer Ecke der Glasscheibe 2 zu dem Querrand 6 oder Längsrand 5 und sind an einen dort angeordneten Controller 8 angeschlossen. Die Anschlussleitungen 7 können auch an einer anderen Stelle als nahe der Ecke an den Längsrand 5 und/oder den Querrand 6 der Glasscheibe 2 geführt sein. Vorzugsweise enden die Anschlussleitungen 7, die von den gekreuzten Leiterbahnen 3 und/oder den kreuzenden Leiterbahnen 4 kommen, eng nebeneinander an dem Längsrand 5 und/oder dem Querrand 6 der Glasscheibe 2 des Touchscreens 1, wo sie an den Controller 8 angeschlossen sind. Es ist auch möglich, die Anschlussleitungen 7 über flexible, auf einen flexiblen Träger kaschierte Leiterbahnen oder in anderer Weise flexible Leiter an den Controller 8 anzuschließen, der in diesem Fall an anderer Stelle als am Rand 5, 6 der Glasscheibe 2 des Touchscreens 1 angeordnet sein kann.

Die Anschlussleitungen 7 am gegenüberliegenden Längsrand 5 und am gegenüberliegenden Querrand 6 der Glasscheibe 2 des Touchscreens 1 führen nahe einer Ecke der Glasscheibe 2 zu dem Längsrand 5 oder dem Querrand 6 und sind an einen dort angeordneten zweiten Controller 9 angeschlossen. Es ist also jede zweite gekreuzte Leiterbahn 3 und jede zweite kreuzende Leiterbahn 4 an den einen Controller 8 und die dazwischen angeordneten gekreuzten und kreuzenden Leiterbahnen 3, 4 an den zweiten Controller 9 angeschlossen.

Die Controller 8, 9 sind elektronische Schaltungen, die im Ausführungsbeispiel als integrierte Schaltungen ausgeführt sind, zur Feststellung einer Position einer Berührung des Touchscreens 1. Sie senden sequenziell nacheinander an die an sie angeschlossenen gekreuzten Leiterbahnen 3 oder kreuzenden Leiterbahnen 4 ein beispielsweise gepulstes elektrisches Signal und empfangen ein Antwortsignal von den an sie angeschlossenen kreuzenden Leiterbahnen 4 oder gekreuzten Leiterbahnen 3 und werten die Antwortsignale aus. Wird die Glasscheibe 2 des Touchscreens 1 berührt oder beispielsweise ein Finger nahe an die Glasscheibe 2 heran gebracht, ändert sich das Antwortsignal an der Kreuzungsstelle der Leiterbahnen 3, 4, an der die Glasscheibe 2 berührt wird, oder an Kreuzungsstellen der Leiterbahnen 3, 4 nahe der Stelle, an der die Glasscheibe 2 berührt wird. Dadurch ist feststellbar, an welcher Stelle die Glasscheibe 2 des Touchscreens 1 berührt wird.

Die Verwendung von zwei Controllern 8, 9, die die Position, an der die Glasscheibe 2 des Touchscreens 1 berührt wird, unabhängig voneinander feststellen, erhöht eine Sicherheit, mit der die Position festgestellt wird. Nur wenn beide Controller 8, 9 dieselbe oder nahezu dieselbe Position feststellen, gilt die Glasscheibe 2 des Touchscreens 1 als an dieser Position berührt.

Um die Sicherheit der Feststellung der Position zu verbessern, verwendete der erfindungsgemäße Touchscreen 1 zwei Controller 8, 9 unterschiedlicher Bauart mit unterschiedlicher Erkennungssoftware, das heißt die Verfahren zur Feststellung der Position der Berührung der Glasscheibe 2 des Touchscreens 1 sind in den beiden Controllern 8, 9 unterschiedlich. Sowohl unterschiedliche Controller 8, 9 als auch unterschiedliche Software erhöhen eine Wahrscheinlichkeit, dass eine von einem der beiden Controller 8, 9 falsch festgestellte Position einer Berührung der Glasscheibe 2 des Touchscreens 1 vom anderen Controller 9, 8 nicht ebenfalls falsch und an derselben Position wie vom einen Controller 8,9 festgestellt wird.

Die beiden Controller 8, 9 können mehrere Positionen, an der die Glasscheibe 2 des Touchscreens 1 gleichzeitig berührt wird, feststellen.

Ein nicht gezeichneter Bildschirm des Touchscreens 1 wird auf derselben Seite der Glasscheibe 2 angeordnet wie die Leiterbahnen 3,4, also auf einer unzugänglichen Rückseite der Glasscheibe 2, so dass die Leiterbahnen 3, 4 nicht berührt werden, sondern von der Glasscheibe 2 des Touchscreens 1 vor Beschädigung geschützt sind. Der Bildschirm ist durch die Glasscheibe 2 des Touchscreens 1 und durch die durchsichtigen Leiterbahnen 3, 4 sichtbar.

## Patentansprüche

1. Berührungsempfindliche Fläche, **dadurch gekennzeichnet, dass** die berührungsempfindliche Fläche (1) zwei Controller (8, 9) aufweist, die eine Position einer Berührung der berührungsempfindlichen Fläche (1) unabhängig voneinander feststellen.

2. Berührungsempfindliche Fläche nach Anspruch 1, **dadurch gekennzeichnet, dass** die berührungsempfindliche Fläche (1) zwei unterschiedliche Controller (8, 9) aufweist.

3. Berührungsempfindliche Fläche nach Anspruch 1 oder 2, **dadurch gekennzeichnet, dass** die Controller (8, 9) unterschiedliche Messverfahren aufweisen.

4. Berührungsempfindliche Fläche nach einem der Ansprüche 1 bis 3, **dadurch gekennzeichnet, dass** die berührungsempfindliche Fläche (1) mehr als zwei Controller () aufweist, die eine Position einer Berührung der berührungsempfindlichen Fläche (1) unabhängig voneinander feststellen.

5. Berührungsempfindliche Fläche nach einem der vorhergehenden Ansprüche, **dadurch gekennzeichnet, dass** die berührungsempfindliche Fläche (1) eine durchsichtige Scheibe (2) aufweist, auf der durchsichtige Leiterbahnen (3) nebeneinander und die nebeneinander angeordneten Leiterbahnen (3) elektrisch isoliert kreuzende, ebenfalls durchsichtige Leiterbahnen (4) ebenfalls nebeneinander angeordnet sind.

6. Berührungsempfindliche Fläche nach einem der vorhergehenden Ansprüche, **dadurch gekennzeichnet, dass** die kreuzenden Leiterbahnen (3, 4) auf gegenüberliegenden Seiten einer Platte oder Scheibe (2) angeordnet sind, die die berührungsempfindliche Fläche (1) aufweist.

7. Berührungsempfindliche Fläche nach einem der vorhergehenden Ansprüche, **dadurch gekennzeichnet, dass** die Controller (8, 9) verschiedene Leiterbahnen (3, 4) der berührungsempfindlichen Fläche (1) benutzen.

8. Berührungsempfindliche Fläche nach einem der vorhergehenden Ansprüche, **dadurch gekennzeichnet, dass** die berührungsempfindliche Fläche (1) Anschlussleitungen (7) zu nebeneinander auf der berührungsempfindlichen Fläche (1) angeordneten, durchsichtigen Leiterbahnen (3,4) an gegenüberliegenden Enden der durchsichtigen Leiterbahnen (3, 4) aufweist, die mit verschiedenen Leiterbahnen (3, 4) verbunden sind.

## Geänderte Patentansprüche

### Geänderte Patentansprüche gemäss Regel 137(2) EPÜ.

1. Berührungsempfindliche Fläche (1) mit zwei Controllern (8, 9), die eine Position einer Berührung der berührungsempfindlichen Fläche (1) unabhängig voneinander feststellen, **dadurch gekennzeichnet, dass** die berührungsempfindliche Fläche (1) zwei unterschiedliche Controller (8, 9) aufweist.

2. Berührungsempfindliche Fläche (1) mit zwei Controllern (8, 9), die eine Position einer Berührung der berührungsempfindlichen Fläche (1) unabhängig voneinander feststellen, **dadurch gekennzeichnet, dass** die Controller (8, 9) unterschiedliche Messverfahren aufweisen.

3. Berührungsempfindliche Fläche nach Anspruch 1 oder 2, **dadurch gekennzeichnet, dass** die berührungsempfindliche Fläche (1) mehr als zwei Controller () aufweist, die eine Position einer Berührung der berührungsempfindlichen Fläche (1) unabhängig voneinander feststellen.

4. Berührungsempfindliche Fläche nach einem der vorhergehenden Ansprüche, **dadurch gekennzeichnet, dass** die berührungsempfindliche Fläche (1) eine durchsichtige Scheibe (2) aufweist, auf der durchsichtige Leiterbahnen (3) nebeneinander und die nebeneinander angeordneten Leiterbahnen (3) elektrisch isoliert kreuzende, ebenfalls durchsichtige Leiterbahnen (4) ebenfalls nebeneinander angeordnet sind.

5. Berührungsempfindliche Fläche nach einem der vorhergehenden Ansprüche, **dadurch gekennzeichnet, dass** die kreuzenden Leiterbahnen (3, 4) auf gegenüberliegenden Seiten einer Platte oder Scheibe (2) angeordnet sind, die die berührungsempfindliche Fläche (1) aufweist.

6. Berührungsempfindliche Fläche nach einem der vorhergehenden Ansprüche, **dadurch gekennzeichnet, dass** die Controller (8, 9) verschiedene Leiterbahnen (3, 4) der berührungsempfindlichen Fläche (1) benutzen.

7. Berührungsempfindliche Fläche nach einem der vorhergehenden Ansprüche, **dadurch gekennzeichnet, dass** die berührungsempfindliche Fläche (1) Anschlussleitungen (7) zu nebeneinander auf der berührungsempfindlichen Fläche (1) angeordneten, durchsichtigen Leiterbahnen (3, 4) an gegenüberliegenden Enden der durchsichtigen Leiterbahnen (3, 4) aufweist, die mit verschiedenen Leiterbahnen (3, 4) verbunden sind.
